# EUROPÄISCHE PATENTSCHRIFT

(11) **EP 3 016 610 B1**
(45) Veröffentlichungstag und Bekanntmachung des Hinweises auf die Patenterteilung: **03.04.2019**
(21) Anmeldenummer: 14735963.2
(22) Anmeldetag: 04.07.2014
(51) Int. Cl.: A61C 8/00, A61C 13/00

(54) **HALBZEUG ZUR ANFERTIGUNG VON ZAHNPROTHETISCHEN ANORDNUNGEN, ABUTMENT UND VERFAHREN ZUR HERSTELLUNG VON ZAHNPROTHETISCHEN ANORDNUNGEN**
SEMI-FINISHED PRODUCT FOR MANUFACTURING DENTAL PROSTHESES, ABUTMENT AND METHOD FOR PRODUCING DENTAL PROSTHESES
DEMI-PRODUIT DESTINÉ À LA FABRICATION DE SYSTÈMES DE PROTHÈSES DENTAIRES, PILIER ET PROCÉDÉ DE FABRICATION DE SYSTÈMES DE PROTHÈSES DENTAIRES

(30) Priorität: 04.07.2013 DE 102013107067
(43) Veröffentlichungstag der Anmeldung: 11.05.2016
(73) Patentinhaber: BREDENT GMBH & CO. KG, 89250 Senden (DE)
(72) Erfinder: BREHM, Peter, 89250 Senden (DE)
(74) Vertreter: Baur & Weber Patentanwälte PartG mbB
(86) Internationale Anmeldenummer: PCT/EP2014/064331
(87) Internationale Veröffentlichungsnummer: WO 2015/001088

(56) Entgegenhaltungen:
- WO-A1-2008/069620
- US-A1- 2012 251 979

## Beschreibung

Die Erfindung betrifft ein Halbzeug zur Anfertigung von zahnprothetischen Anordnungen. Darüber hinaus betrifft die Erfindung ein Verfahren zur Herstellung eines Halbzeugs zur Herstellung von zahnprothetischen Anordnungen.

Abutments sind aus dem allgemeinen Stand der Technik bekannt und werden auf dem Gebiet der Zahnprothetik auf vielfältige Weise verwendet. Allgemein versteht man unter einem Abutment ein Aufbauelement, das zur Befestigung von Kronen oder Zahnbrücken in der Zahnheilkunde herangezogen wird. Darüber hinaus sind Abutments auch als Primär- oder Sekundärhalterungen von stegartigen oder teleskopartigen zahnprothetischen Anordnungen bekannt.

Um die gewünschte Befestigungsmöglichkeit zu schaffen, werden Abutments üblicherweise mittels eines metallischen Stifts bereitgestellt, der in Kombination mit einem in einem Kieferknochen verankerten Implantat als Verankerungspunkt dient. Auf der gegenüber liegenden Seite wird beispielsweise eine Krone angeordnet. Üblicherweise werden Abutments aus Titan gefertigt. Eine Krone kann dann beispielsweise auf das Abutment aufgeklebt oder aufgeschraubt werden.

Implantate sind ebenfalls aus dem allgemeinen Stand der Technik bekannt. Zur Verankerung in einem Kieferknochen weisen Implantate eine Schraubverbindung auf, wobei auf der gegenüber liegenden Seite dann beispielsweise eine Zahnkrone oder das Abutment angeordnet werden kann.

Neben der Herstellung von Implantaten bzw. Abutments und Kronen in speziell dafür ausgestatteten zahntechnischen Laboratorien haben sich in den letzten Jahren auch Systeme bewährt, bei denen die zahnprothetischen Elemente während der Behandlung des Patienten durch den Zahnarzt angefertigt werden können. Neben der damit erzielbaren Kostenersparnis wird auch eine für den Patienten angenehmere Behandlung ermöglicht, da, ohne weitere Iterationen bei einem Zahntechniker durchführen zu müssen, eine individuelle Anpassung an die Gegebenheiten des Patienten erfolgen kann. Die individuelle Bearbeitbarkeit durch einen Zahnarzt ermöglicht somit eine sehr effiziente Anfertigung von zahnprothetischen Anordnungen. Dem englischen Sprachgebrauch folgend werden diese Systeme auch als Chair-Side-Systeme bezeichnet. Dieser Begriff macht deutlich, dass die Anfertigung von zahnprothetischen Anordnungen direkt am bzw. neben dem Zahnarztstuhl erfolgt.

Bekannte Beispiele für Chair-Side-Systeme weisen ein optisches Erfassungssystem auf, das die fallindividuelle Erstellung von zahnprothetischen Anordnungen ermöglicht, die nach Verarbeitung in einem Computer in ein dementsprechendes Fräsprogramm umgesetzt werden. Das Fräsprogramm liefert entsprechende Anweisungen, um ein Halbzeug so zu bearbeiten, dass es die gewünschte zahnprothetische Anordnung repräsentiert. Bekannte Halbzeuge dieser Art weisen üblicherweise eine eingespritzte Titanarmierung auf, in die beispielsweise eine Titanbasis greifen kann. Das Halbzeug besteht üblicherweise aus einem Sinterkeramikmaterial.

Aus der US 2012/0251979 A1 ist ein Verfahren zur Herstellung von Zahnersatzmittel aus Halbzeugen bekannt, bei dem ein Abutment in das Halbzeug integriert ist. Das Halbzeug weist einen den Fräskörper durchdringenden Kanal auf und umschließt das in das Halbzeug integrierte Abutment.

In der WO 2008/069620 A1 wird ein Halbzeug beschrieben, das ebenfalls ein Verankerungselement in Form eines Abutments aufweist. Als Material wird für den Grundkörper Zirkon oder ein Zirkon/Aluminium-Verbundmaterial angegeben.

Bekanntlich treten beim Einsatz von zahnprothetischen Anordnungen oftmals hohe Kräfte auf, die zu mechanischen Belastungen führen können, so dass eventuell mechanische Schäden auftreten können.

Folglich besteht in der Technik ein Bedarf, oben genannte Nachteile zu überwinden und bekannte Halbzeuge oder auch generell zahnprotethische Anordnungen weiter zu verbessern.

Es ist daher Aufgabe der Erfindung, ein Halbzeug oder ein Abutment zu schaffen, bei dem eine weitere Verbesserung bezüglich der mechanischen Eigenschaften erreicht wird. Des Weiteren soll ein Verfahren zur Herstellung eines Halbzeugs zur Herstellung einer zahnprotethischen Anordnung angegeben werden, die eine einfache Herstellung bei verbesserten mechanischen Eigenschaften ermöglicht.

Diese Aufgabe wird durch die Merkmale der unabhängigen Patentansprüche gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird in ein Halbzeug zur Anfertigung von zahnprothetischen Anordnungen, insbesondere von Abutments, geschaffen, das folgendes umfasst: einen ein- oder mehrfarbigen Grundkörper, der einen den Grundkörper durchdringenden Kanal aufweist, auf dessen Innenfläche ein hohlzylindrisches Verankerungselement ausgebildet ist, wobei der Grundkörper das Verankerungselement wenigstens teilweise vollflächig mit einem thermoplastischen Kunststoffmaterial in ein- oder mehrfarbiger Ausprägung bedeckt.

Demgemäß wird in einem Halbzeug ein Verankerungselement eingebracht, das beispielsweise mittels Heißpressen von einem thermoplastischen Kunststoffmaterial innerhalb des Grundkörpers angeordnet ist. Während der Grundkörper aus dem thermoplastischen Kunststoffmaterial in weiteren Bearbeitungsschritten mit einem entsprechenden Fräs- oder Schleifalgorithmus zu der gewünschten zahnprothetischen Anordnung weiter verarbeitet werden kann, bildet das Verankerungselement eine Möglichkeit, die so geschaffene zahnprothetische Anordnung entsprechend zu halten. Dazu ist das Verankerungselement in Form eines Hohlzylinders ausgebildet, so dass entweder ein Schraubkanal oder eine Verklebefläche geschaffen wird, die zur Verankerung herangezogen werden kann. Aufgrund der zwischenraumfreien Verbindung zwischen dem Verankerungselement und dem Grundkörper ist die zahnprothetische Anordnung in der Lage, hohe Kräfte aufzunehmen, ohne sich dabei zu lösen oder abzusplittern. Dies hat zur Folge, dass hohe Kaukräfte aufgenommen werden können, so dass die mit diesem Halbzeug geschaffene zahnprothetische Anordnung hohen mechanischen Belastungen Stand hält. Es ist auch möglich, zwei- und gegebenenfalls auch mehrfarbige Halbzeuge zu schaffen, so dass beispielsweise ein später bei der Verwendung des Halbzeugs als zahnprothetische Anordnung im Zahnfleisch befindlicher Anteil mit einer rosa Teileinfärbung ausgeführt wird, um insbesondere in einem Frontzahnbereich eine Anpassung an den optischen Eindruck echter Zähne zu erreichen.

Das Verankerungselement kann mit einer Beschichtung versehen sein, wobei die Beschichtung auf einer der Innenfläche abgewandten Seite, vorzugsweise aus dem thermoplastischen Material, aufgebracht ist.

Gemäß dieser Ausführungsform wird insbesondere beim Verkleben der zahnprothetischen Anordnung eine Klebefläche geschaffen, die ebenfalls aus dem thermoplastischen Kunststoffmaterial bestehen kann. Folglich ist es möglich, die Haltbarkeit der Klebestelle weiter zu verbessern.

Das Verankerungselement kann auf einer der Innenfläche zugewandten Seite eine aufgerauhte Oberfläche aufweisen.

Versuche haben gezeigt, dass eine aufgerauhte Oberfläche die Verbindung des Verankerungselements mit dem Grundkörper mittels Heißpressens fördern kann. Die aufgerauhte Oberfläche kann dabei eine Körnung im Bereich von einigen 100 µm aufweisen, wobei die genaue Ausgestaltung von den verwendeten Materialien abhängig ist.

Gemäß einer weiteren Ausführungsform ist das Verankerungselement aus einem Nichtedelmetall, vorzugsweise Titan oder einer Titanlegierung, aus einer Keramik, insbesondere Aluminiumoxyd oder Zirconium-Dioxyd oder aus einem faserverstärkten dentaltauglichen Material gefertigt.

Titan ist im menschlichen Körper zur Verwendung in der Zahnprothetik bestens geeignet. Insbesondere im Zusammenspiel mit einem thermoplastischen Kunststoffmaterial ergeben sich spannungsfreie Aufbauten, wobei der aus dem thermoplastischen Kunststoffmaterial bestehende Grundkörper mit dem Verankerungselement lückenlos verbunden ist. Dabei zeigt sich überraschenderweise, dass das heiß verpresste Kunststoffmaterial mit dem Nichtedelmetall eine besonders stabile Verbindung bildet, die darüber hinaus frei von Rissen oder Lücken ist. Eine Vermutung besteht darin, dass sich das auf der Oberfläche des Nichtedelmetalls bildende Metalloxyd beispielsweise mit Polymerketten des Grundkörpers verbindet, die dem Halbzeug besonders leistungsfähige Eigenschaften verleiht. Keramische Materialien wie Aluminiumoxyd oder auch Zirkonium-Dioxyd können ebenfalls verwendet werden. Darüber hinaus hat sich gezeigt, dass die Verwendung von faserverstärktem Material dem Verankerungselement genügend Stabilität verleiht, so dass auch dies zur Verwendung in einem Halbzeug eingesetzt werden kann.

In einer weiteren Ausführungsform ist das Verankerungselement mit einem aus dem Grundkörper heraus ragenden Basiselement versehen.

Zusätzlich zu den bisher geschilderten Ausführungsformen, bei denen das Verankerungselement beispielsweise als eingespritzte Titanarmierung zur Aufnahme einer Klebebasis für unterschiedliche Implantatsysteme herangezogen werden kann, wird gemäß dieser Ausführungsform das Basiselement zusammen mit dem Verankerungselement in den Grundkörper eingebracht. Das Basiselement und das Verankerungselement können dabei einstückig ausgeführt sein, so dass sie zusammen in den thermoplastischen Kunststoff des Grundkörpers eingespritzt werden. Es ist jedoch ebenso möglich, das Basiselement beispielsweise mittels einer mechanischen Verbindung mit dem Verankerungselement zu verbinden.

Das Basiselement kann einen in ein Implantat einführbaren Haltestift, der vorzugsweise einen nicht rotationssymmetrischen Querschnitt aufweist, oder ein in einem Kieferknochen verankerbares Implantat umfassen.

Demgemäß ist es möglich, das Halbzeug zusammen mit dem Basiselement als Aufbaukörper für eine zahnprothetische Anordnung zu verwenden. Das Basiselement dient dabei der Verankerung in einem Kieferknochen, die entweder über den in das Implantat einführbaren Haltestift erfolgt oder bereits selbst als Implantat ausgebildet ist, so dass es in den Kieferknochen eingebracht werden kann. Demzufolge wird eine zahnprothetische Anordnung geschaffen, die ohne weitere Bearbeitungsschritte in den Kiefer eines Patienten eingesetzt werden kann.

Gemäß einer weiteren Ausführungsform ist das Basiselement in dem Verankerungselement mittels Verkleben befestigt.

Nach dieser Ausführungsform dient das Basiselement als Klebebasis, die mit dem Verankerungselement adhäsiv verbunden ist.

Das Basiselement kann mit einer Oberflächenstruktur versehen sein, die in eine korrespondierende Oberflächenstruktur des Verankerungselements einführbar ist.

Dies unterstützt die adhäsive Befestigung des Verankerungselements mit dem Basiselement, so dass eine dauerhafte und zuverlässige Klebeverbindung geschaffen werden kann.

Zusätzlich zur adhäsiven Verbindung kann nun das Basiselement in dem Verankerungselement auch mit einer Retentionsmechanik befestigt sein, die vorzugsweise als Bajonettverschluss ausgebildet ist. Diese Maßnahme kann auch anstelle der adhäsiven Verbindung durchgeführt werden und sorgt für eine zuverlässige Verbindung zwischen Basiselement und Verankerungselement.

Das Basiselement kann aus einem Nichtedelmetall, vorzugsweise Titan oder einer Titanlegierung, aus einer Keramik, insbesondere Aluminiumoxid oder Zirconium-Dioxid oder aus einem dentaltauglichen Material gefertigt sein.

Insbesondere Titan oder Titanlegierungen werden beim oben beschriebenen Verkleben zwischen Basiselement und Verankerungselement bevorzugt eingesetzt. Die anderen genannten Materialien sind jedoch nicht ausgeschlossen.

In einer weiteren Ausführungsform ist der Grundkörper mit einem Halteelement verbindbar, das zur Halterung in einer Bearbeitungsvorrichtung dient.

Demgemäß lassen sich mit dem erfindungsgemäßen Halbzeug sogenannte Chair-Side-Systeme aufbauen, bei dem der Grundkörper mittels eines mechanischen Bearbeitungsschrittes, beispielsweise Fräsen oder Schleifen, in die gewünschte Form computerunterstützt geformt wird.

Das Halteelement kann dabei so ausgeführt sein, dass es in das Verankerungselement oder in das Basiselement eingeführt werden kann.

Demgemäß wird eine stabile und zuverlässige Halterung des Grundkörpers des Halbzeugs mittels des Halteelements geschaffen. Dazu kann das Halteelement und er Kanal axial ineinander greifend angeordnet sein, so dass das Halteelement und der Kanal zueinander ausgerichtet sind. Dies hat zur Folge, dass die Längsachse des Kanals mit einer Längsachse des Halteelements übereinstimmt, so dass das Halbzeug mit dem Verankerungselement in die sogenannte A-Achse der Bearbeitungsvorrichtung eingebracht werden kann.

Das Halteelement und der Kanal können aber auch entlang ihrer Längsachsen eine unterschiedliche Richtung, vorzugsweise einen rechten Winkel, aufweisen.

Demgemäß ist das Halteelement mit einer anderen Achszuordnung im Vergleich zum Kanal ausgebildet, wobei in Chair-Side-Systemen üblicherweise die sogenannte Y-Achse zum Einsatz kommt. Diese Ausführungsform wird vorteilhafterweise dann eingesetzt, wenn das Verankerungselement bzw. das Basiselement nicht mit der Achse der Maschinenhalterung übereinstimmen sollen.

Das Halteelement kann in den Grundkörper eingespritzt sein. Es ist jedoch auch vorgesehen, dass das Halteelement einstückig zusammen mit dem ein- oder mehrfarbigen Grundkörper geformt ist.

Demgemäß wird ein einstückiges Halbzeug geschaffen, das in gängigen Bearbeitungsvorrichtungen weiter verarbeitet werden kann. Dies wird entweder durch Einspritzen oder einstückiges Formen erreicht.

In einer anderen Ausführungsform ist es vorgesehen, dass das Halteelement mit dem Grundkörper verklebt ist, so dass sich zwischen dem Grundkörper und dem Halteelement eine Klebefuge ergibt.

Dabei kann es vorteilhaft sein, wenn das Halteelement wenigstens an der der Klebefuge zugewandten Seite mit einer Beschichtung, vorzugsweise aus dem thermoplastischen Kunststoff, versehen ist.

Demgemäß wird die Verklebung zwischen dem Halteelement und dem Grundkörper unterstützt, indem das Halteelement im Bereich der Klebefuge aus demselben thermoplastischen Kunststoffmaterial beschichtet ist.

Als thermoplastische Kunststoffe kommen PEEK, PAEK oder PEKK in Frage. PEEK (abgekürzt für Polyetheretherketon), PAEK (abgekürzt für Polyaryletherketon) oder PEKK (abgekürzt für Polyetherketonketon) sind als biokompatible Werkstoffe bei der Verwendung in der Medizin im Wesentlichen physiologisch inert und folglich für den Patienten eritationsfrei. Daneben weisen die genannten thermoplastischen Kunststoffe aber auch eine hohe Belastbarkeit auf, so dass hohe Bruchstabilitäten erreicht werden können. Folglich bietet dieses Material hohe Sicherheitsreserven, was insbesondere bei der Verwendung von Implantaten oder Abutments im Seitenzahnbereich wichtig ist.

Besonders vorteilhaft ist die Verwendung des oben beschriebenen erfindungsgemäßen Halbzeugs in einer Bearbeitungsvorrichtung zur Anfertigung von Abutments, Implantaten oder Kronen, wobei die Bearbeitungsvorrichtung eine vorzugsweise computerunterstützte Bearbeitung des Grundkörpers ausführen kann.

Gemß der Erfindung wird auch ein Abutment angegeben umfassend einen ein- oder mehrfarbigen Grundkörper, der einen den Grundkörper durchdringenden Kanal aufweist, auf dessen Innenfläche ein hohlzylindrisches Verankerungselement ausgebildet ist, wobei der Grundkörper das Verankerungselement wenigstens teilweise vollflächig mit einem thermoplastisches Kunststoffmaterial aus PEEK, PEKK oder PAEK in ein- oder mehrfarbiger Ausprägung bedeckt.

Demgemäß wird in ein Abutment ein Verankerungselement eingebracht, das beispielsweise mittels Heißpressen von einem thermoplastischen Kunststoffmaterial umgeben ist. Während der Grundkörper aus dem thermoplastischen Kunststoffmaterial mit der gewünschten Abutmentform herstellbar ist, bildet das Verankerungselement eine Möglichkeit, die so geschaffene zahnprothetische Anordnung beispielsweise in ein Implantat einzusetzen oder mit einem Aufbauelement zu versehen.

Schließlich wird ein Verfahren zur Herstellung von zahnprothetischen Anordnungen, insbesondere von Abutments oder Halbzeugen zur Anfertigung von Abutments, Implantaten oder Kronen, angegeben, das die nachfolgend angeführten Schritte beinhaltet. Zuerst erfolgt ein Bereitstellen eines hohlzylindrischen Verankerungselements. Anschließend wird das hohlzylindrische Verankerungselement mit einem Kunststoffgranulat oder Kunststoffpellets eines thermoplastischen Kunststoffmaterials umgeben. Dann erfolgt ein Heißpressen des Kunststoffgranulats oder der Kunststoffpellets, so dass ein Grundkörper gebildet wird, der einen den Grundkörper durchdringenden Kanal aufweist, auf dessen Innenfläche das hohlzylindrisches Verankerungselement angeordnet ist, wobei der Grundkörper das Verankerungselement wenigstens teilweise vollflächig mit dem thermoplastischen Kunststoffmaterial bedeckt.

Mittels Heißpressen wird ein Verankerungselement von einem thermoplastischen Kunststoffmaterial umgeben, so dass es innerhalb eines Grundkörpers angeordnet wird. Während der Grundkörper aus dem thermoplastischen Kunststoffmaterial in weiteren Bearbeitungsschritten mit einem entsprechenden Fräs- oder Schleifalgorithmus zu der gewünschten zahnprothetischen Anordnung weiter verarbeitet werden kann, bildet das Verankerungselement eine Möglichkeit, die so geschaffene zahnprothetische Anordnung entsprechend zu halten. Als thermoplastisches Kunststoffmaterial kommt wiederum PEEK, PEKK, PAEK in Frage.

In einer weiteren Ausführungsform des Verfahrens wird darüber hinaus während des Heißverpressens ein Halteelement gebildet, das zur Halterung in einer Bearbeitungsvorrichtung dient, wobei die Bearbeitungsvorrichtung eine vorzugsweise computerunterstütze Bearbeitung des Grundkörpers (GK) ausführt.

Des Weiteren kann die Implantatverbindungsgeometrie am Halbzeug während des Heißpressens gebildet werden.

Demgemäß kann das Halteelement zusammen mit dem Grundkörper in einem einzigen Herstellungsschritt geschaffen werden, was eine besonders kostengünstige Fertigung einer zahnprothetischen Anordnung beziehungsweise eines Halbzeugs ermöglicht.

In einer weiteren Ausführungsform des Verfahrens wird ein im Zahnfleisch befindlicher Anteil der zahnprothetischen Anordnung mit einer rosa Teileinfärbung ausgeführt.

Demnach ist es möglich, eine zwei- gegebenenfalls auch mehrfarbige zahnprothetische Anordnung zu schaffen, bei der insbesondere in einem Frontzahnbereich eine Anpassung an den optischen Eindruck echter Zähne erreicht wird, so dass das Tragen einer zahnprothetischen Anordnung für einen Betrachter wenig auffällig ist. Dadurch wird die Akzeptanz von zahnprothetischen Anordnungen erhöht.

Nachfolgend werden einige Ausführungsbeispiele anhand der Zeichnungen näher erläutert. Es zeigen:
- Fig. 1: ein erfindungsgemäßes Halbzeug in einer perspektivischen Seitenansicht gemäß einer ersten Ausführungsform,
- Fig. 2: ein erfindungsgemäßes Halbzeug in einer perspektivischen Seitenansicht gemäß einer zweiten Ausführungsform,
- Fig. 3: ein erfindungsgemäßes Halbzeug in einer perspektivischen Seitenansicht gemäß einer dritten Ausführungsform,
- Fig. 4: das Halteelement der Ausführungsform gemäß Fig. 3 in einer vergrößerten Darstellung,
- Fig. 5: ein erfindungsgemäßes Halbzeug in einer perspektivischen Seitenansicht in einer weiteren Ausführungsform,
- Fig. 6: ein erfindungsgemäßes Halbzeug in einer perspektivischen Seitenansicht gemäß einer weiteren Ausführungsform,
- Fig. 7: eine vergrößerte Darstellung eines Details des erfindungsgemäßen Halbzeugs in einer Draufsicht,
- Fig. 8: ein Basiselement zur Verwendung in dem erfindungsgemäßen Halbzeug in einer Draufsicht,
- Fig. 9: eine Schnittansicht eines erfindungsgemäßen Halbzeugs,
- Fig. 10: eine Detailansicht des erfindungsgemäßen Halbzeugs bei der weiteren Verarbeitung,
- Fig. 11 (A) bis (C): ein Basiselement mit retentiven Bereichen in einer Querschnittsansicht bzw. in einer Draufsicht,
- Fig. 12: eine weitere Schnittansicht eines erfindungsgemäßen Halbzeugs, und
- Fig. 13: eine Schnittansicht eines erfindungsgemäßen Abutments.

In den Figuren sind gleiche oder funktional gleich wirkende Bauteile mit dem gleichen Bezugszeichen versehen.

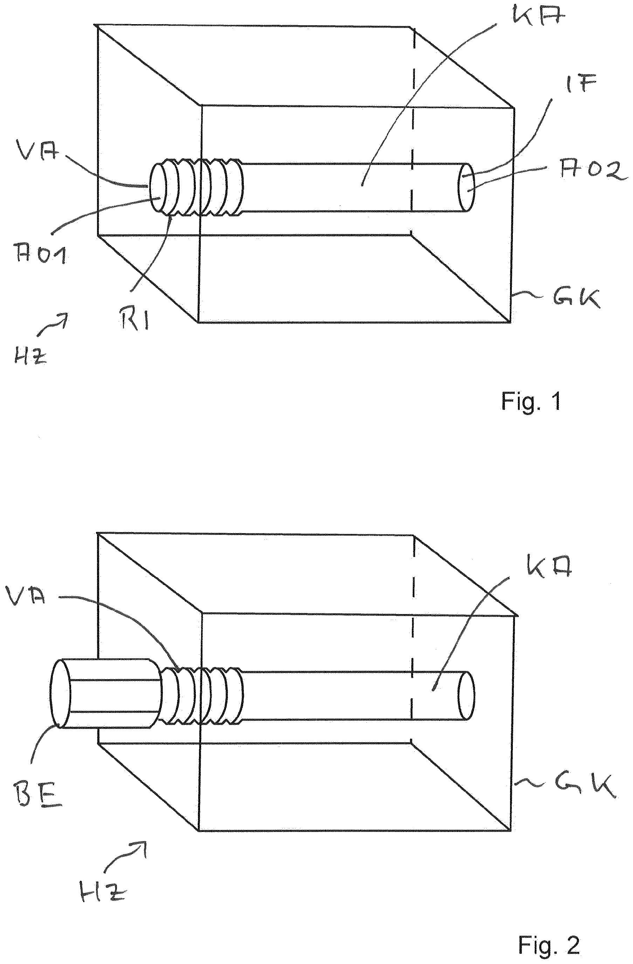

In Fig. 1 wird nachfolgend eine erste Ausführungsform eines Halbzeugs HZ beschrieben. Das Halbzeug HZ ist in Fig. 1 in einer perspektivischen Seitenansicht gezeigt. Das Halbzeug HZ umfasst einen Grundkörper GK, der einen Kanal KA aufweist, der den Grundkörper GK durchdringt. Folglich werden im Grundkörper GK eine erste Austrittsöffnung AO1 und eine zweite Austrittsöffnung AO2 gebildet. In der Nähe der ersten Austrittsöffnung AO1 ist auf der Innenfläche EF des Kanals KA ein hohlzylindrisches Verankerungselement VA ausgebildet.

Der Grundkörper GK wird aus einem thermoplastischen Kunststoffmaterial geformt, das das Verankerungselement VA vollflächig umschließt. Das Verankerungselement kann beispielsweise durch Einspritzen in den thermoplastischen Kunststoff des Grundkörpers GK hergestellt werden. Um eine hohe Stabilität zwischen dem Verankerungselement VA und dem Grundkörper GK zu erreichen, kann das Verankerungselement VA auf seiner Außenseite, d. h. der dem Kanal KA zugewandten Seite, mit mehreren Rillen RI versehen sein. Darüber hinaus ist es auch vorgesehen, dass das Verankerungselement VA zusätzlich oberhalb der Rillen RI mit einer Beschichtung versehen ist, die aus dem thermoplastischen Kunststoffmaterial geformt ist.

In Fig. 2 ist eine zweite Ausführungsform des erfindungsgemäßen Halbzeugs HZ wiederum in einer perspektivischen Seitenansicht gezeigt Bei dieser Ausführungsform ist das Verankerungselement VA zusätzlich mit einem aus dem Grundkörper GK herausragenden Basiselement BE versehen, das beispielsweise als ein in ein Implantat einführbarer Haltestift oder bereits als einen einen Kieferknochen verankerbares Implantat ausgebildet ist. Das Basiselement BE kann dazu entweder einen nicht rotationssymmetrischen Querschnitt aufweisen, der beispielsweise durch eine entsprechende Profilierung gebildet ist oder mit einem schraubenförmigen Profil versehen sein.

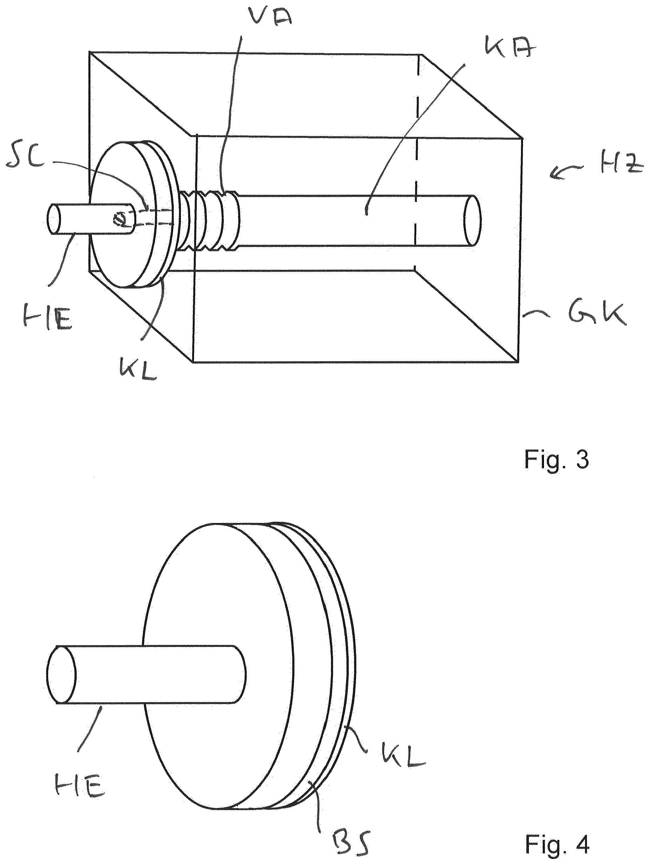

In Fig. 3 ist das Halbzeug HZ aus Fig. 1 in einer weiteren Ausführungsform gezeigt. Zusätzlich zu den bereits in Fig. 1 beschriebenen Komponenten weist das Halbzeug HZ ein Halteelement HE auf, das durch den Kanal KA mittels einer Schraube SC mit dem Grundkörper GK verbunden ist. Das Halteelement HE dient als Einspannhilfe in eine Bearbeitungsvorrichtung.

Das Halteelement HE ist in Fig. 4 nochmals in vergrößerter Darstellung gezeigt. Das Halteelement HE kann auf das Halbzeug HZ aufgeklebt sein, wobei zwischen dem Grundkörper GK und dem Halteelement HE eine Klebefuge KL gebildet ist. Im Bereich der Klebefuge KL kann das Halteelement HE mit einer Beschichtung BS versehen sein, die in Fig. 4 gestrichelt dargestellt ist. Diese Beschichtung BS besteht aus dem thermoplastischen Kunststoffmaterial des Grundkörpers GK, so dass sich eine gute Klebeverbindung zwischen dem Halteelement HE und dem Grundkörper GK herstellen läßt. Darüber hinaus ist es auch möglich, dass das Halteelement HE bereits in den Grundkörper GK, ähnlich dem Verankerungselement VA oder dem Basiselement BE eingespritzt wird.

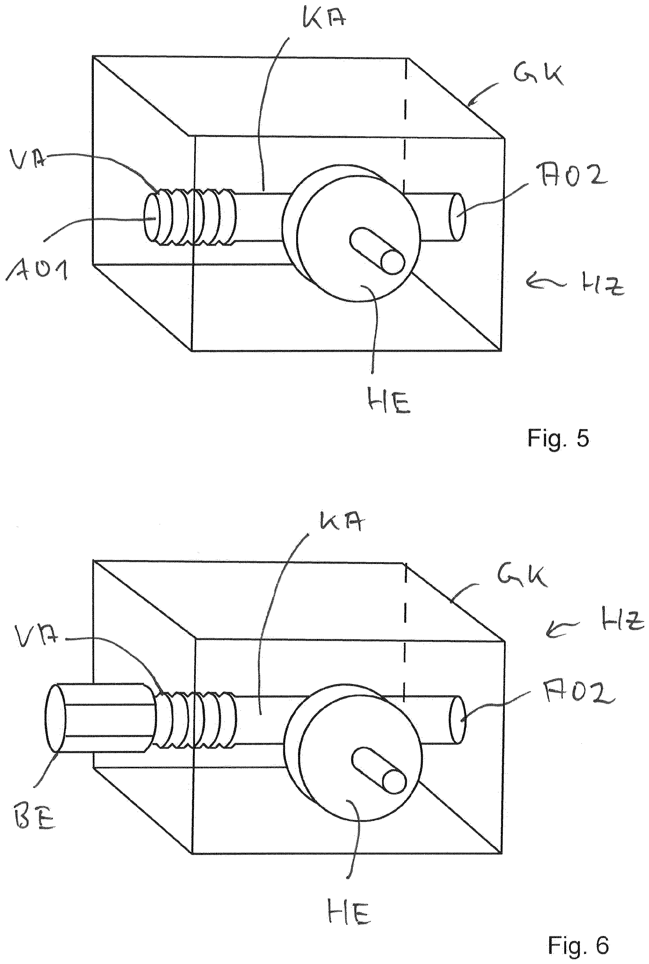

In der Ausführungsform gemäß Fig. 3 ist das Halteelement HE und der Kanal KA axial ineinander greifend angeordnet. Demgemäß sind das Halteelement HE und der Kanal KA zueinander ausgerichtet, d. h. in derselben Orientierung angeordnet. In manchen Anwendungsfällen ist es jedoch vorteilhaft, wenn das Halteelement HE nicht mit der Achse des Kanals KA zusammen fällt. Dabei kann es insbesondere vorgesehen sein, dass die Längsachsen des Halteelements HE und des Kanals KA zueinander einen rechten Winkel aufweisen. Eine Ausführungsform des erfindungsgemäßen Halbzeugs HZ, bei der der Kanal KA und eine Längsachse des Halteelementes HE einen rechten Winkel einschließen ist in Fig. 5 gezeigt. Hierbei ist wieder das Halteelement HE an den Grundkörper GK angeklebt, wobei es ebenfalls möglich ist, das Halteelement HE bereits in den Grundkörper GK einzuspritzen. Die in Fig. 3 gezeigte Konfiguration des Kanals KA wird üblicherweise als A-Achse bezeichnet, während die in Fig. 5 gezeigte Ausführungsform als Y-Achse bezeichnet wird. In der Ausführungsform gemäß Fig. 5 ist im Inneren des Kanals KA, der wiederum zwei Austrittsöffnungen AO1 und AO2 aufweist, in der Nähe der ersten Austrittsöffnung AO1 das Verankerungselement VA angeordnet.

In Fig. 6 ist eine weitere Ausführungsform des erfindungsgemäßen Halbzeugs gezeigt, wobei diese Ausführungsform wiederum der gedrehten Kanalachse KA gemäß Fig. 5 entspricht, wobei zusätzlich nun auch das Befestigungselement BE vorhanden ist, wie es im Zusammenhang mit Fig. 2 bereits beschrieben wurde.

Das Verankerungselement, wie es in den Fig. 1 bis 6 gezeigt ist, wird üblicherweise aus Titan oder einer Titanlegierung gefertigt. Allgemein können auch andere Nichtedelmetalle zum Einsatz kommen. Ebenso ist es möglich, das Verankerungselement VA aus einer Keramik, beispielsweise Aluminiumoxyd oder Zirkoniumdioxyd herzustellen. Eine weitere Möglichkeit könnte darin bestehen, ein faserverstärktes dentaltaugliches Material an der Innenfläche IF des Kanals KA anzubringen, das dann das Verankerungselement VA bildet.

Das Basiselement BE wird üblicherweise ebenfalls aus Titan oder einer Titanlegierung gefertigt, wobei hier auch andere Nichtedelmetalle bzw. die oben genannten Keramiken zum Einsatz kommen können. Das Basiselement BE und das Verankerungselement VA können auch einstückig ausgebildet sein.

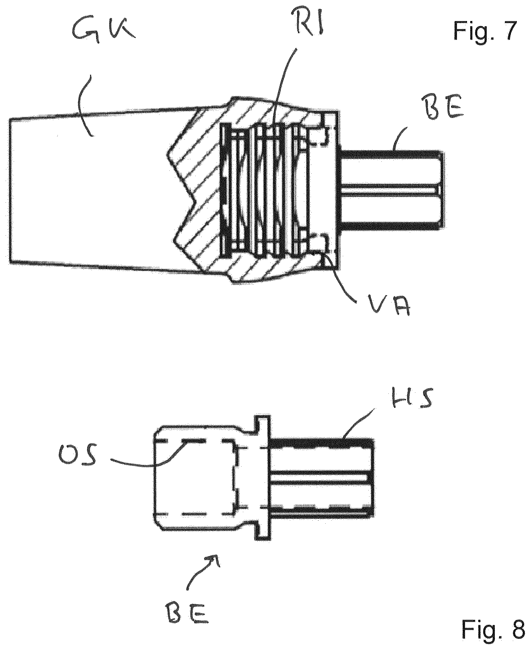

In Fig. 7 ist eine weitere Ausführungsform des Halbzeugs HZ gezeigt, bei der das Verankerungselement VA und das Basiselement BE als getrennte Bauteile bereit gestellt werden. In Fig. 7 ist das Halbzeug HZ in einer Draufsicht gezeigt, wobei im Bereich der ersten Austrittsöffnung AO1 das Halbzeug HZ in der Zeichenebene aufgeschnitten dargestellt ist. Man erkennt, dass das Verankerungselement VA auf seiner Außenseite Rillen RI aufweist, die eine Verbindung zwischen dem Verankerungselement VA und dem Kanal KA eingehen.

Das Basiselement BE, das in Fig. 8 nochmals einzeln dargestellt ist, weist auf der dem Verankerungselement zugewandten Seite eine Oberflächenstruktur OS auf, die beispielsweise als zylindrische Ausnehmung ausgebildet ist. Das Verankerungselement VA weist eine entsprechende korrespondierende Oberflächenstruktur OS auf, so dass das Basiselement BE und das Verankerungselement VA ineinander passen. In dieser Ausführungsform kann das Basiselement BE auf einfache Weise in das Verankerungselement VA eingeklebt werden. Aus dem Grundkörper GK ragt im Wesentlichen der Haltestift HS hervor, so dass nach Bearbeitung des Grundkörpers GK beispielsweise ein Abutment gebildet wird.

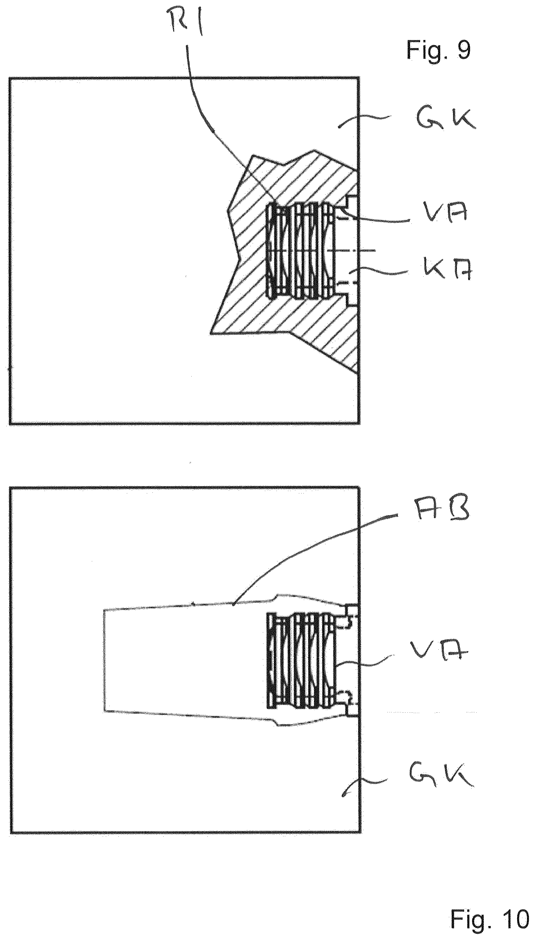

Die Bildung eines Abutments AB wird in den Fig. 9 und 10 nochmals beispielhaft erläutert. Fig. 9 ist dabei eine Darstellung des Halbzeugs HZ mit einem Grundkörper GK, der im Bereich des Verankerungselements VA aufgeschnitten dargestellt ist. Durch Materialabtrag des Grundkörpers GK kann beispielsweise das Abutment AB gebildet werden, wie es in Fig. 10 eingezeichnet ist.

Die bisherige Verbindung zwischen dem Basiselement BE und dem Verankerungselement VA erfolgte adhäsiv. Es ist aber durchaus möglich, die Verbindung zwischen dem Basiselement BE und dem Verankerungselement VA mechanisch, d. h. mit retentiven Elementen vorzusehen. Die Retentionsmechanik kann dabei zusätzlich oder anstelle der adhäsiven Verbindung eingesetzt werden.

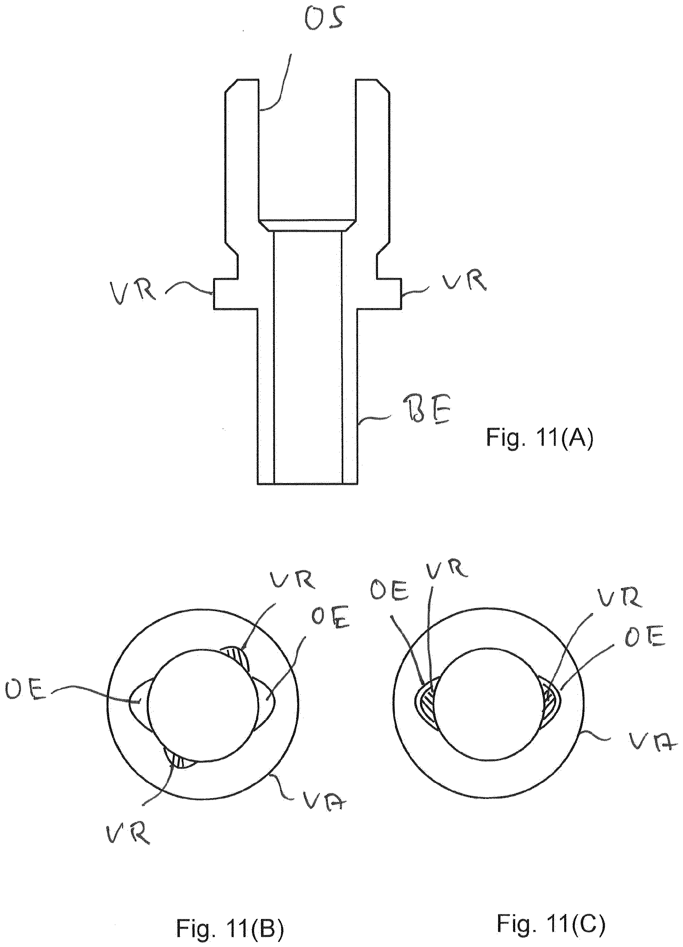

Ein Beispiel für ein Basiselement BE, das retentive Elemente aufweist, ist in den Fig. 11 (A) bis 11 (C) gezeigt. In Fig. 11 (A) ist das Basiselement BE in einer Schnittansicht gezeigt. Das Basiselement BE weist auf der später dem Verankerungselement VA zugewandten Seite die Oberflächenstruktur OS auf. Auf Seitenflächen ist in eine Richtung, die senkrecht zur Kanalachse definiert ist, eine Verriegelung VR angeordnet, die als Retentionsmechanik eingesetzt werden kann.

In Fig. 11 (B) ist das Basiselement BE in Richtung der Kanalachse dargestellt, wobei die Verriegelungen VR in entsprechende Öffnungen OE des Verankerungselements VA greifen können, so dass durch Drehung eine mechanische Befestigung des Basiselementes BE im Verankerungselement VA geschaffen wird.

In Fig. 11 (C) ist die Positionierung des Basiselements BE gezeigt, die einem geöffneten Zustand der Verriegelung zwischen Basiselement BE und Verankerungselement VA entspricht. Dabei korrespondieren die Verriegelungen VR mit den Öffnungen OE, so dass das Basiselement BE in das Verankerungselement VA eingebracht werden kann.

Der im Zusammenhang mit den Fig. 11 (A) bis 11 (C) beschriebene Verriegelungsmechanismus stellt eine zusätzliche mechanische Belastbarkeit sicher, wenn das Halbzeug in einer zahnprothetischen Anordnung hohen Kräften ausgesetzt ist. Dieser Verschlussmechanismus entspricht im Wesentlichen einem Bajonettverschluss.

Als thermoplastischer Kunststoff kann sowohl für die Bildung des Grundkörpers GK als auch für die oben beschriebenen Beschichtungen des Verankerungselements VA sowie des Halteelement HE der thermoplastische Kunststoff als PEEK bzw. PEKK oder PAEK gewählt werden. Aus diesen Kunststoffmaterialien läßt sich durch Fräsen bzw. Schleifen des Grundkörpers GK in einer entsprechenden Bearbeitungsvorrichtung nahezu beliebig geformte Abutments, Implantate oder auch Kronen herstellen. Die genannten Kunststoffmaterialien sind biokompatibel und weisen eine sehr hohe Stabilität auf. Das Kunststoffmaterial kann auf das Verankerungselement VA beispielsweise durch Verpressen gebracht werden, wobei vorzugsweise ein Erhitzen in einem Temperaturbereich zwischen 380°C und 400°C durchgeführt wird. Diese Temperatur hat sich als besonders wirkungsvoll herausgestellt, und liegt oberhalb des Schmelzpunktes von PEEK aber unterhalb desjenigen Temperaturbereichs, bei dem eine Degradierung der verwendeten Materialien beginnen würde. Beim Schritt des Heißverpressens wird eine lückenlose Umschließung des Verankerungselements VA erreicht, wobei die Rillen RI als retentive Bereiche dienen, die nach dem Erkalten des Kunststoffmaterials ein Aufschrumpfen begünstigen. Außerdem können sich Molekülketten des PEEK mit oberflächlich oxidierten Titan des Verankerungselements VA verbinden. Diese chemische Verbindung unterstützt das Anhaften des Kunststoffmaterials über dem Verankerungselement VA, so dass eine im Wesentlichen vollflächige Bedeckung des Verankerungselements VA mit dem Kunststoffmaterial eintritt.

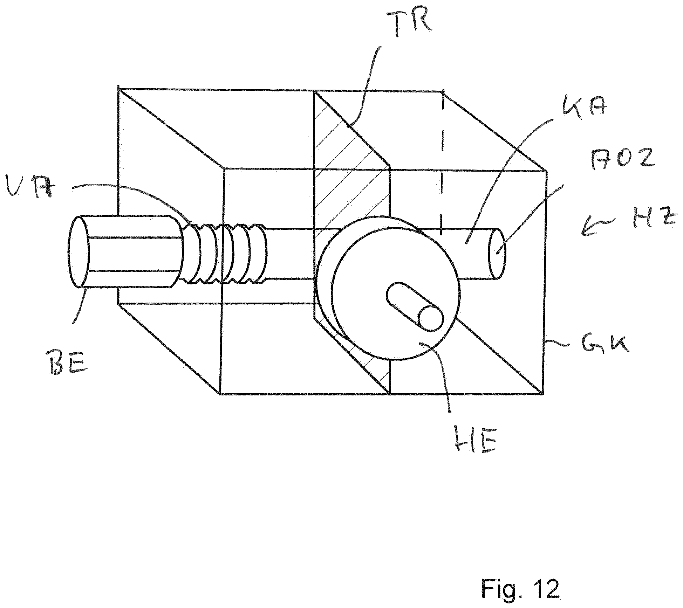

In Fig. 12 ist eine weitere Ausführungsform eines erfindungsgemäßen Halbzeugs HZ gezeigt. Diese Ausführungsform zeigt einen mehrfarbigen Aufbau des Grundkörpers GK. Das den Grundkörper GK bildende thermoplastische Material ist in dem gezeigten Ausführungsbeispiel zweifarbig beispielsweise Weiß und Rosa eingefärbt. Die unterscheidlichen Färbungen treffen an der Trennlinie TR zusammen. Demnach ist es möglich, ein zwei- gegebenenfalls auch mehrfarbiges Halbzeug HZ zu schaffen, so dass insbesondere bei Verwendung in einem Frontzahnbereich der optischen Eindruck entsprechend verändert ist.

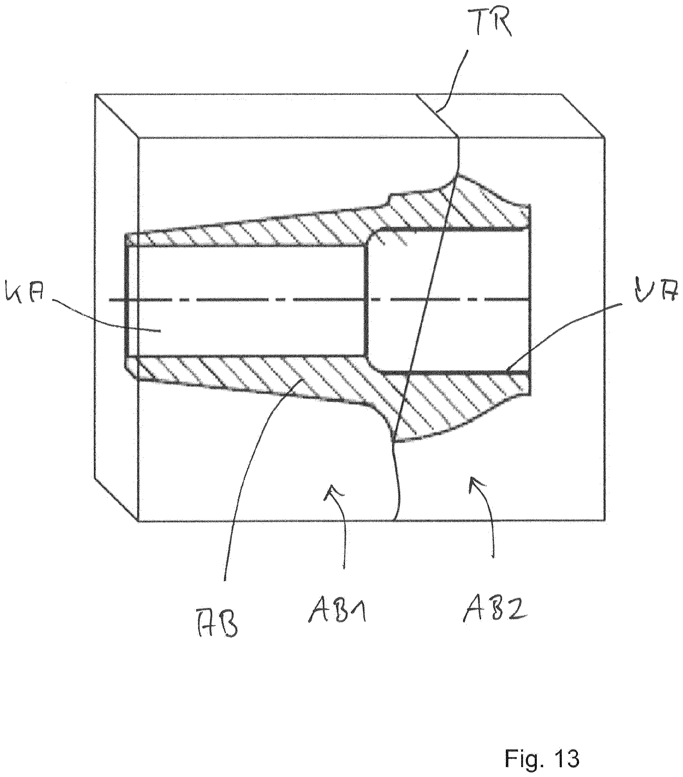

In Figur 13 ist ein Abutment AB gezeigt, bei dem der Grundkörper GK nicht mehr als Block vorliegt sondern bereits als zahnprothetische Anordnung gefertigt ist. Ein oberer Bereich AB1 dient als Aufnahme beispielsweise für eine Krone. Der obere Bereich AB1 weist eine weiße Färbung auf, so dass nach Aufkleben der Krone ein optisch ansprechendes Produkt entsteht. In einem unteren Bereich AB2 weist das Abutment eine beispielsweise zahnfleischfarbene Färbung auf. Das Abutment ist darüber hinaus mit dem Verankerungselement VA versehen, das im oberen Bereich AB1 und im unteren Bereich AB2 von dem thermoplastischen Kunststoff des Grundkörpers GK bedeckt ist. Das Verankerungselement VA kann auf fachübliche Weise einen Schraubkanal für eine Okklusalverschraubung an einem dem oberen Bereich AB1 zugewandten Ende und eine Aufnahme in ein Implantat an einem dem unteren Bereich AB2 zugewandten Ende aufweisen. Das Abutment AB kann entweder aus dem Grundkörper eines wie oben in der Fig. 12 beschriebenen Halbzeugs HZ gefertigt sein oder aber auch auf das Verankerungselement VA aufgespritzt oder aufgepresst sein. Ein solches Abutment AB individuell oder vorgefertigt hergestellt werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise, innerhalb des Schutzumfangs, der durch die nachfolgenden Ansprüche definiert ist, abwandelbar.

## Patentansprüche

1. Halbzeug zur Anfertigung von zahnprothetischen Anordnungen, insbesondere von ein- oder mehrfarbigen Abutments, umfassend einen ein- oder mehrfarbigen Grundkörper (GK), der einen den Grundkörper (GK) durchdringenden Kanal (KA) aufweist, auf dessen Innenfläche (IF) ein hohlzylindrisches Verankerungselement (VA) ausgebildet ist, das mit einem aus dem Grundkörper (GK) herausragenden Basiselement (BE) versehen ist, wobei der Grundkörper (GK) mit einem Halteelement (HE) verbindbar ist, das zur Halterung in einer Bearbeitungsvorrichtung dient, und der Grundkörper (GK) mittels eines Heißpressverfahrens das Verankerungselement (VA) wenigstens teilweise vollflächig mit einem thermoplastischen Kunststoffmaterial in ein- oder mehrfarbiger Ausprägung bedeckt, **dadurch gekennzeichnet, dass** das Verankerungselement (VA) und das Basiselement (BE) als getrennte Bauelemente ausgeführt sind.

2. Halbzeug nach Anspruch 1, bei dem das Verankerungselement (VA) mit einer Beschichtung versehen ist, wobei die Beschichtung auf einer der Innenfläche (IF) abgewandten Seite, vorzugsweise aus dem thermoplastischen Kunststoffmaterial, aufgebracht ist.

3. Halbzeug nach einem der Ansprüche 1 bis 2, bei dem das Verankerungselement (VA) auf einer der Innenfläche (IF) zugewandten Seite eine aufgeraute Oberfläche aufweist.

4. Halbzeug nach einem der Ansprüche 1 bis 3, bei dem das Verankerungselement (VA) aus einem Nichtedelmetall, vorzugsweise Titan oder einer Titanlegierung, aus einer Keramik, insbesondere Aluminiumoxid, Zirconium-Dioxid, oder Lithium-Disilikat, oder aus einem faserverstärkten dentaltauglichen Material gefertigt ist.

5. Halbzeug nach einem der Ansprüche 1 bis 4, bei dem das Basiselement (BE) einen in ein Implantat einführbaren Haltestift, der vorzugsweise einen nicht rotationssymmetrischen Querschnitt aufweist, oder ein in einem Kiefer- oder einer anderen Knochentopographie verankerbares Implantat umfasst.

6. Halbzeug nach einem der Ansprüche 1 bis 5 bei dem das Basiselement (BE) in dem Verankerungselement (VA) mittels Verkleben befestigt ist.

7. Halbzeug nach Anspruch 6, bei dem das Basiselement (BE) mit einer Oberflächenstruktur versehen ist, die in eine korrespondierende Oberflächenstruktur des Verankerungselements (VA) einführbar ist.

8. Halbzeug nach einem der Ansprüche 1 bis 7, bei dem das Basiselement (BE) in dem Verankerungselement (VA) ausschließlich oder zusätzlich mittels einer Retentionsmechanik, vorzugsweise einem Bajonettverschluss, befestigt ist.

9. Halbzeug nach einem der Ansprüche 1 bis 8, bei dem das Basiselement (BE) aus einem Nichtedelmetall, vorzugsweise Titan oder einer Titanlegierung, aus einer Keramik, insbesondere Aluminiumoxid oder Zirconium-Dioxid, oder aus einem dentaltauglichen Material gefertigt ist.

10. Halbzeug nach einem der Ansprüche 1 bis 9, bei dem das Halteelement (HE) mit dem Grundkörper (GK) verklebt ist, so dass sich zwischen dem Grundkörper (GK) und dem Halteelement (HE) eine Klebefuge (KL) ergibt.

11. Halbzeug nach Anspruch 10, bei dem das Halteelement (HE) wenigstens an der der Klebefuge (KL) zugewandten Seite mit einer Beschichtung, vorzugsweise aus dem thermoplastischen Kunststoff versehen ist.

12. Halbzeug nach einem der Ansprüche 1 bis 11, bei dem der thermoplastische Kunststoff PEEK, PEKK oder PAEK ist.

13. Verfahren zur Herstellung eines Halbzeuges nach Anspruch 1, zur Herstellung von zahnprothetischen Anordnungen, insbesondere von Abutments oder Halbzeugen zur Anfertigung von Abutments, Implantaten oder Kronen, umfassend folgende Schritte:
- Bereitstellen eines hohlzylindrischen Verankerungselements (VA);
- Umgeben des hohlzylindrischen Verankerungselements (VA) mit einem Kunststoffgranulat (KG) oder Kunststoffpellet (KP) oder Kunststoffpulver eines thermoplastischen Kunststoffmaterials; und
- Heißpressen des Kunststoffgranulats (KG) oder der Kunststoffpellets (KP), so dass ein Grundkörper (GK) gebildet wird, der einen den Grundkörper (GK) durchdringenden Kanal (KA) aufweist, auf dessen Innenfläche (IF) das hohlzylindrisches Verankerungselement (VA) angeordnet ist, wobei der Grundkörper (GK) das Verankerungselement (VA) wenigstens teilweise vollflächig mit dem thermoplastischen Kunststoffmaterial bedeckt ist.

14. Verfahren nach Anspruch 13, bei dem darüber hinaus während des Heißpressens ein Halteelement (HE) gebildet wird, das zur Halterung in einer Bearbeitungsvorrichtung dient, wobei die Bearbeitungsvorrichtung eine vorzugsweise computerunterstütze Bearbeitung des Grundkörpers (GK) ausführt.

15. Verfahren nach einem der Ansprüche 13 oder 14, bei dem ein bei der Verwendung des Halbzeugs als zahnprothetische Anordnung im Zahnfleisch befindlicher Anteil der zahnprothetischen Anordnung mit einer, vorzugsweise rosa, Teileinfärbung ausgeführt wird.

## Claims

1. Semifinished product for manufacture of dental prosthetics, especially of single- or multicolour abutments, comprising a single- or multicolour main body (GK) having a channel (KA) which penetrates the main body (GK), and on the inner surface (IF) of which a hollow-cylindrical anchoring element (VA) provided with a base element (BE) that projects out of the main body (GK) has been formed, wherein the main body (GK) is connectable to a holding element (HE) that serves for retaining in a working device, and the main body (GK), by means of a hot compression method, covers the anchoring element (VA) at least partly over the full area with a thermoplastic material in single- or multicolour form, **characterized in that** the anchoring element (VA) and the base element (BE) are executed as separate components.

2. Semifinished product according to Claim 1, in which the anchoring element (VA) has been provided with a coating, where the coating has been applied on a side facing away from the inner surface (IF), preferably of the thermoplastic material.

3. Semifinished product according to either of Claims 1 and 2, in which the anchoring element (VA) has a roughened surface on a side facing the inner surface (IF).

4. Semifinished product according to any of Claims 1 to 3, in which the anchoring element (VA) has been manufactured from a base metal, preferably titanium or a titanium alloy, from a ceramic, especially aluminium oxide, zirconium dioxide or lithium disilicate, or from a fibre-reinforced dental material.

5. Semifinished product according to any of Claims 1 to 4, in which the base element (BE) has a holding pin which is insertable into an implant and preferably has a rotationally nonsymmetric cross section, or comprises an implant anchorable in a jaw topography or another bone topography.

6. Semifinished product according to any of Claims 1 to 5, in which the base element (BE) is secured in the anchoring element (VA) by means of adhesive bonding.

7. Semifinished product according to Claim 6, in which the base element (BE) has been provided with a surface structure insertable into a corresponding surface structure of the anchoring element (VA).

8. Semifinished product according to any of Claims 1 to 7, in which the base element (BE) is secured in the anchoring element (VA) exclusively or additionally by means of retention mechanics, preferably a bayonet coupling.

9. Semifinished product according to any of Claims 1 to 8, in which the base element (BE) has been manufactured from a base metal, preferably titanium or a titanium alloy, from a ceramic, especially aluminium oxide or zirconium dioxide, or from a dental material.

10. Semifinished product according to any of Claims 1 to 9, in which the holding element (HE) has been bonded to the main body (GK) so as to result in a bonded join (KL) between the main body (GK) and the holding element (HE).

11. Semifinished product according to Claim 10, in which the holding element (HE) has been provided at least on the side facing the bonded join (KL) with a coating, preferably of the thermoplastic.

12. Semifinished product according to any of Claims 1 to 11, in which the thermoplastic is PEEK, PEKK or PAEK.

13. Method of producing a semifinished product according to Claim 1, for production of dental prosthetics, especially of abutments or semifinished products for manufacture of abutments, implants or crowns, comprising the following steps:
- providing a hollow-cylindrical anchoring element (VA);
- surrounding the hollow-cylindrical anchoring element (VA) with a granular polymer (KG) or pelletized polymer (KP) or polymer powder of a thermoplastic material; and
- hot-pressing the granular polymer (KG) or the pelletized polymer (KP), so as to form a main body (GK) having a channel (KA) which penetrates the main body (GK), and on the inner surface (IF) of which the hollow-cylindrical anchoring element (VA) is disposed, wherein the main body (GK) is covered the anchoring element (VA) at least partly over the full area with the thermoplastic material.

14. Method according to Claim 13, in which a holding element (HE) is additionally formed during the hot pressing, which serves for retaining in a working device, wherein the working device is a preferably computer-assisted working operation on the main body (GK).

15. Method according to either of Claims 13 and 14, in which a portion of the dental prosthetic which is present within the gum when the semifinished product is used as dental prosthesis is executed with a preferably pink partial colour.

## Revendications

1. Produit semi-fini pour la fabrication de systèmes de prothèses dentaires, notamment de piliers mono- ou multicolores, comprenant un corps de base mono- ou multicolore (GK), qui comprend un canal (KA) traversant le corps de base (GK), sur la surface intérieure (IF) duquel un élément d'ancrage cylindrique creux (VA) est formé, qui est muni d'un élément de base (BE) dépassant du corps de base (GK), le corps de base (GK) pouvant être relié avec un élément support (HE), qui sert au support dans un dispositif d'usinage, et le corps de base (GK) recouvrant au moyen d'un procédé de pressage à chaud l'élément d'ancrage (VA) au moins sur une partie de la surface avec une matière plastique thermoplastique sous une forme mono- ou multicolore, **caractérisé en ce que** l'élément d'ancrage (VA) et l'élément de base (BE) sont configurés sous la forme de composants séparés.

2. Produit semi-fini selon la revendication 1, dans lequel l'élément d'ancrage (VA) est muni d'un revêtement, le revêtement étant appliqué sur un côté opposé à la surface intérieure (IF), de préférence en la matière plastique thermoplastique.

3. Produit semi-fini selon l'une quelconque des revendications 1 à 2, dans lequel l'élément d'ancrage (VA) présente une surface rugosifiée sur un côté orienté vers la surface intérieure (IF).

4. Produit semi-fini selon l'une quelconque des revendications 1 à 3, dans lequel l'élément d'ancrage (VA) est fabriqué en un métal non noble, de préférence le titane ou un alliage de titane, en une céramique, notamment l'oxyde d'aluminium, le dioxyde de zirconium ou le disilicate de lithium, ou en un matériau dentaire adéquat renforcé par des fibres.

5. Produit semi-fini selon l'une quelconque des revendications 1 à 4, dans lequel l'élément de base (BE) comprend une goupille de retenue insérable dans un implant, qui présente de préférence une section transversale non symétrique par rotation, ou comprend un implant ancrable dans une topographie de mâchoire ou une autre topographie osseuse.

6. Produit semi-fini selon l'une quelconque des revendications 1 à 5, dans lequel l'élément de base (BE) est fixé dans l'élément d'ancrage (VA) par collage.

7. Produit semi-fini selon la revendication 6, dans lequel l'élément de base (BE) est muni d'une structure de surface qui est insérable dans une structure de surface correspondante de l'élément d'ancrage (VA).

8. Produit semi-fini selon l'une quelconque des revendications 1 à 7, dans lequel l'élément de base (BE) est fixé dans l'élément d'ancrage (VA) exclusivement ou en outre au moyen d'un système mécanique de rétention, de préférence d'une fermeture à baïonnette.

9. Produit semi-fini selon l'une quelconque des revendications 1 à 8, dans lequel l'élément de base (BE) est fabriqué en un métal non noble, de préférence le titane ou un alliage de titane, en une céramique, notamment l'oxyde d'aluminium ou le dioxyde de zirconium, ou en un métal dentaire adapté.

10. Produit semi-fini selon l'une quelconque des revendications 1 à 9, dans lequel l'élément support (HE) est collé avec le corps de base (GK), de manière à former un joint de collage (KL) entre le corps de base (GK) et l'élément support (HE).

11. Produit semi-fini selon la revendication 10, dans lequel l'élément support (HE) est muni au moins sur le côté orienté vers le joint de collage (HL) d'un revêtement, de préférence en la matière plastique thermoplastique.

12. Produit semi-fini selon l'une quelconque des revendications 1 à 11, dans lequel la matière plastique thermoplastique est la PEEK, la PEKK ou la PAEK.

13. Procédé de fabrication d'un produit semi-fini selon la revendication 1, pour la fabrication de systèmes de prothèses dentaires, notamment de piliers ou de produits semi-finis pour la fabrication de piliers, d'implants ou de couronnes, comprenant les étapes suivantes :
- la préparation d'un élément d'ancrage cylindrique creux (VA) ;
- l'enveloppement de l'élément d'ancrage cylindrique creux (VA) avec un granulat de matière plastique (KG) ou des pastilles de matière plastique (KP) ou une poudre de matière plastique d'une matière plastique thermoplastique ; et
- le pressage à chaud du granulat de matière plastique (KG) ou des pastilles de matière plastique (KP), de manière à former un corps de base (GK), qui comprend un canal (KA) traversant le corps de base (GK), sur la surface intérieure (IF) duquel l'élément d'ancrage cylindrique creux (VA) est agencé, le corps de base (GK) étant recouvert l'élément d'ancrage (VA) sur au moins une partie de la surface avec la matière plastique thermoplastique.

14. Procédé selon la revendication 13, selon lequel un élément support (HE) est en outre formé pendant le pressage à chaud, qui sert au support dans un dispositif d'usinage, le dispositif d'usinage réalisant un usinage de préférence assisté par ordinateur du corps de base (GK) .

15. Procédé selon l'une quelconque des revendications 13 ou 14, selon lequel une partie du système de prothèse dentaire qui se trouve dans la gencive lors de l'utilisation du produit semi-fini en tant que système de prothèse dentaire est réalisée avec une coloration partielle, de préférence rosée.
